(19) Europäisches Patentamt
European Patent Office
Office européen des brevets

(11) Veröffentlichungsnummer : **0 177 701 B1**

# (12) EUROPÄISCHE PATENTSCHRIFT

(45) Veröffentlichungstag der Patentschrift : **06.07.88**

(21) Anmeldenummer : **85109747.7**

(22) Anmeldetag : **02.08.85**

(51) Int. Cl.$^4$ : **C 08 J 5/04**, C 08 J 3/08, C 08 L 81/02, C 08 L 65/00, B 29 C 67/14

## (54) Verfahren zur Herstellung von Thermoplast-Prepregs.

(30) Priorität : **11.08.84 DE 3429670**

(43) Veröffentlichungstag der Anmeldung : **16.04.86 Patentblatt 86/16**

(45) Bekanntmachung des Hinweises auf die Patenterteilung : **06.07.88 Patentblatt 88/27**

(84) Benannte Vertragsstaaten : **BE DE FR GB IT NL**

(56) Entgegenhaltungen :
**EP-A- 0 013 244**
**EP-A- 0 031 198**
**EP-A- 0 102 711**
**DE-A- 3 301 345**

(73) Patentinhaber : **BASF Aktiengesellschaft**
**Carl-Bosch-Strasse 38**
**D-6700 Ludwigshafen (DE)**

(72) Erfinder : **Fischer, Juergen, Dr.**
**Thomas-Mann-Strasse 62**
**D-6700 Ludwigshafen (DE)**
Erfinder : **Zeiner, Hartmut, Dr.**
**Johann-Strauss-Strasse 13**
**D-6831 Plankstadt (DE)**
Erfinder : **Nissen, Dietmar, Dr.**
**Ziegelhaeuser Landstrasse 31**
**D-6900 Heidelberg (DE)**
Erfinder : **Heinz, Gerhard, Dr.**
**Im Vogelsang 2**
**D-6719 Weisenheim (DE)**

**EP 0 177 701 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Der Erfindung betrifft ein Verfahren zur Herstellung von thermoplastisch verformbaren, faserverstärkten Thermoplast-Prepregs, bei dem Endlosfaserstränge oder -gewebe mit Polysulfidketon oder Polyetherketon imprägniert werden.

Unidirektional verstärkte Faserverbundwerkstoffe mit einer Matrix aus einem temperaturbeständigen thermoplastischen Kunststoff werden gewöhnlich durch Tränken von Endlosfasern mit einer Lösung des Thermoplasten hergestellt. Dies ist nur bei löslichen, amorphen Thermoplasten möglich, welche infolge ihrer Löslichkeit spannungsrißempfindlich sind. Unlösliche, teilkristalline Thermoplasten weisen diesen Nachteil nicht auf. Sie können als Schmelze auf die Fasern aufgebracht werden. Wegen der hohen Schmelzviskositäten ist dies jedoch verfahrenstechnisch recht schwierig, vor allem wenn hohe Molekulargewichte vorliegen.

In der EP-A-13 244 wird vorgeschlagen. Fasern mit wäßrigen Dispersionen von thermoplastischen Kunststoffe, u. a. auch Polyethern zu imprägnieren. Dabei müssen Dispergierhilfsmittel , wie Polyethylenoxid oder Hydroxyethylcellulose eingesetzt werden, welche im Verbund verbleiben und dessen Eigenschaften verschlechtern.

Der Erfindung lag lso die Aufgabe zugrunde, ein Verfahren zur Herstellung von faserverstärkten Thermoplastprepregs zu entwickeln, welches die genannten Nachteile nicht aufweist.

Es wurde gefunden, daß diese Aufgabe gelöst wird, wenn man die Endlosfaserstränge oder -gewebe durch ein Bad führt, wo sie mit einer Dispersion eines Polysulfidketons oder eines Polyetherketons in einer organischen Flüssigkeit getränkt werden, und dann die organische Flüssigkeit verdampft.

Die eingesetzten teilkristallinen thermoplastischen Kunststoffe Polysulfidketon und Polyetherketon sind bekannt. Sie enthalten neben Arylen- und Keton-Gruppen Sulfid- bzw. Ether-Brücken, wobei die Reihenfolge der Bausteine zwar regelmäßig ist, aber verschieden sein kann. Bevorzugt sind folgende Strukturen :

[—Ø—S—Ø—CO—]
[—Ø—S—Ø—CO—Ø—CO—]
[—Ø—S—Ø—CO—Ø—O—Ø—CO—]
[—Ø—O—Ø—CO—]
[—Ø—O—Ø—O—Ø—CO—]
[—Ø—O—Ø—CO—Ø—CO—]
[—Ø—O—Ø—O—Ø—CO—Ø—CO—]

wobei Ø eine Arylen-, vorzugsweise eine Phenylengruppe ist.

Die Herstellung der Polysulfidketone ist z. B. in der DE-A-1 620 923, die von Polyetherketonen in DE-A-1 645 153, DE-A-2 206 835, DE-A-2 433 278 und EP-A-1 879 beschrieben.

Als Dispergiermittel werden organische Flüssigkeiten, vorzugsweise mit einem Siedepunkt zwischen 30 und 100 °C verwendet, insbesondere Halogenkohlenwasserstoffe, wie Dichlormethan, Chloroform und Mischungen davon.

Bei einer bevorzugten Ausführungsform der Erfindung enthält die organische Flüssigkeit 0,1 bis 10 Gew.% eines amorphen oder überwiegend amorphen thermoplastischen Kunststoffs mit einer Glastemperatur oberhalb von 100 °C als Dispergierhilfsmittel gelöst. Bevorzugte amorphe Thermoplaste sind Polysulfone und Polyethersulfone. Diese Hilfsmittel haben den großen Vorteil, daß sie die Eigenschaften des Verbundmaterials nicht nachteilig beeinflussen, da sie selbst gute Matrixeigenschaften besitzen. Im Falle des Polysulfidketons können sie sogar mit den teilkristallinen Matrixmaterial durch Erhitzen auf Temperaturen oberhalb 350 °C vernetzt werden. Außer ihrer Wirkung als Dispergierhilfsmittel verbessern sie auch die Haftung des teilkristallinen Thermoplasten auf den Fasern in der Prepreg-Stufe.

Vorzugsweise arbeitet man mit Polysulfidketon bzw. Polyetherketon-Dispersionen, die einen Feststoffgehalt von 10 bis 50 Gew.%, insbesondere von 15 bis 25 Gew.% und eine Viskosität beim Tränken unterhalb von 2 000 mPas, vorzugsweise zwischen 100 und 1 000 mPas haben. Die mittlere Teilchengröße des Polysulfidketons in der Dispersion beträgt vorzugsweise 1 bis 30, insbesondere 3 bis 10 µm.

Zum Einsatz kommen übliche Endlosfasern, z. B. aus Glas, Kohlenstoff oder aromatischen Polyamiden (Aramid-Fasern). Sie können als Rovings, einzeln oder in Bandform nebeneinanderliegend, durch das Tränkbad gezogen werden. Die Rovings sollen möglichst gut gespreizt, d. h. flächig auseinandergezogen werden, was durch bekannte Vorrichtungen bewirkt werden kann.

Die verwendeten teilkristallinen Thermoplaste haben mittlere Molekulargewichte ($M_n$) von 10 000 bis 40 000, vorzugsweise zwischen 25 000 und 35 000. Der Fasergehalt des getränkten Rovings soll vorzugsweise 30 bis 85, insbesondere 45 bis 65 Vol.% betragen. Der Fasergehalt kann durch den Feststoffgehalt der Tränkdispersion, die Verweilzeit im Bad, sowie durch ein nach dem Tränkbad angeordnetes Quetschwalzenpaar beeinflußt werden. Anschießend an das Tränkbad durchlaufen die getränkten Rovings eine Trockenstrecke, wo die Lösungsmittel, vorzugsweise bei Temperaturen oberhalb von 70 °C, insbesondere zwischen 80 und 200 °C verdampft werden.

Die imprägnierten, kunstharzgebundenen Prepreg-Rovings können — in Form von Einzelfäden oder

von 0,5 bis 2 cm breiten Bändern — klebfrei auf Spulen gewickelt werden. Sie stellen ein lagerstabiles Halbzeug dar, das thermoplastisch weiterverarbeitbar ist. Man kann sie z. B. — gegebenenfalls auch direkt nach dem Imprägnieren und Trocknen — nach dem Durchlaufen einer Vorheizstrecke auf Kerne aufwickeln, dort durch Erhitzen auf Temperaturen bis zu 420 °C verbinden und auf diese Weise rotationssymmetrische Fertigteile, z. B. Rohre, herstellen, die nicht mehr nachgehärtet werden müssen. Ferner kann man den imprägnierten Roving direkt auf einem Wickelkern positionieren und erst dann das Lösungsmittel entfernen.

Flächige Prepregs können hergestellt werden, indem man eine Vielzahl von Rovings parallel durch das Tränkbad führt und das entstehende, vorzugsweise 2 bis 150 cm breite, imprägnierte Roving-Band nach dem Trocknen in plattenförmige Stücke schneidet oder endlos auf Spulen wickelt.

Diese vorzugsweise 0,1 bis 0,5 mm dicken, unidirektional faserverstärkten Prepregs können schichtweise übereinandergestapelt werden, wobei die einzelnen Prepregs in beliebige Winkel zueinander gelegt werden können. Die Stapel können dann durch Verpressen bei Temperaturen oberhalb des Schmelzbereichs des Thermoplasten zu Fertigteilen verarbeitet werden. Dabei heizt man den Stapel außerhalb der Presse auf und legt dann in die Presse ein, die auf einer Temperatur unterhalb des Schmelzbereichs des Thermoplasten gehalten wird.

Die Polysulfidketon- und Polyetherketon-Dispersionen lassen sich sehr vorteilhaft auch zum Tränken von Geweben und von Matten aus Glas-, Kohle- oder Aramidfasern verwenden. Durch den niedrigen Siedepunkt der organischen Flüssigkeit können die getränkten Gewebe und Matten sehr einfach vom anhaftenden Lösungsmittel befreit werden. Sind die Matten bzw. Gewebe in die Matrix eingebettet, so können sie thermoplastisch in Formteilpressen weiterverarbeitet werden. Man erwärmt dazu die Zuschnitte auf Temperaturen von 300 bis 420 °C und verpreßt bei einer Temperatur unterhalb des Schmelzpunktes des Thermoplasten.

Die in den Beispielen genannten Teile und Prozente beziehen sich auf das Gewicht.

Herstellung einer Dispersion

A. Man stellt zunächst eine 3 %ige Lösung eines Polysulfons (®Ultrason S der BASF AG) in Dichlormethan her.

In diese Lösung wird Polysulfidketon (einer mittleten Teilchengröße von 5 μm, Schmelzpunkt 350 °C, K-Wert : 32) mit Hilfe einer Mischvorrichtung eingebracht. Die fertige Dispersion besteht aus 30 Teilen Polysulfidketon und 70 Teilen der zuvor hergestellten lösung.

B. Eine Dispersion wird wie bei A beschrieben hergestellt. Als Dispersionshilfsmittel dient in diesem Falle jedoch ein Polyethersulfon (®Ultrason E der BASF AG), in Dichlormethan gelöst wird.

Herstellung von Prepregs

1. Die Dispersion nach A wird dazu verwendet, um einen gewebeverstärkten Verbund herzustellen. Dazu werden Gewebelagen (Glasgewebe mit 280 $g/m^2$ der Fa. Interglas) mit der Dispersion getränkt.

Das Lösungsmittel läßt man zunächst bei Raumtemperatur abdampfen, danach werden 15 Lagen übereinandergestapelt und der Stapel wird in einen Umluftofen in wenigen Minuten vom restlichen Lösungsmittel befreit. Anschließend wird der Stapel in einer Plattenpresse bei 50 bar und 380 °C für 10 Minuten verpreßt. Man erhält ein gewebeverstärktes Verbundmaterial mit hoher Temperaturbeständigkeit und hoher Lösungsmittelbeständigkeit. Der Glasgehalt beträgt 60 Vol.%.

2. Die Dispersion nach B wird dazu verwendet, um ein unidirektional verstärktes Prepreg herzustellen. Dazu werden 100 Glasrovings parallel durch ein Bad mit der Dispersion gezogen (Glas : EC14 1200tex der Fa. Gevetex).

Nach dem Tränkbad wird das Lösungsmittel abgedampft und man erhält nach dem Durchlaufen eines Glättkalanders ein flächiges Prepreg-Material mit 65 Vol.% Glasanteil.

3. 8 Lagen dieses Prepreg-Materials werden so aufeinandergelegt, daß alle Fasern parallel zueinander liegen.

Dieser Stapel wird unter einer Plattenpresse bei 30 bar und 380 °C für ca. 15 Minuten verpreßt. Man erhält eine unidirektional verstärkte Verbundplatte.

**Patentansprüche**

1. Verfahren zur Herstellung von faserverstärkten Prepregs, dadurch gekennzeichnet, daß man Endlosfaserstränge oder -gewebe durch ein Bad führt, wo sie mit einer Dispersion eines Polysulfidketons oder eines Polyetherketons in einer organischen Flüssigkeit getränkt werden, und dann die organische Flüssigkeit verdampft.

2. Verfahren nach Anspruch 1, dadurch gekennzeichnet, daß man eine 10 bis 50 gew.%ige Dispersion des Polyetherketons oder Polysulfidketons einzetzt.

3. Verfahren nach Anspruch 1, dadurch gekennzeichnet, daß man die organische Flüssigkeit einen

Siedepunkt zwischen 30 und 100 °C hat.

4. Verfahren nach Anspruch 1, dadurch gekennzeichnet, daß die organische Flüssigkeit Dichlormethan, Chloroform oder eine Mischung davon ist.

5. Verfahren nach Anspruch 1, dadurch gekennzeichnet, daß die organische Flüssigkeit 0,1 bis 10 Gew.% eines thermoplastischen Kunststoffs mit einer Glastemperatur oberhalb von 100 °C als Dispergierhilfsmittel gelöst enthält.

6. Verfahren nach Anspruch 1, dadurch gekennzeichnet, daß man die getränkten Endlosfaserstränge auf einen Kern wickelt.

7. Verfahren zur Herstellung von flächigen Prepregs, dadurch gekennzeichnet, daß man nach Anspruch 1 eine Vielzahl von Endolsfasersträngen parallel oder ein Gewebe durch ein Tränkbad führt, und das entstehende Band nach dem Trocken in Stücke schneidet oder endlos auf Spulen aufwickelt.

## Claims

1. A process for producing a fiber-reinforced prepreg, which comprises passing a filament bundle or fabric through a bath where said bundle or fabric is impregnated with a dispersion of a polysulfide ketone or polyether ketone in an organic liquid and then evaporating the organic liquid.

2. A process as claimed in claim 1, wherein a from 10 to 50 % strength by weight dispersion of the polyether ketone or polysulfide ketone is used.

3. A process as claimed in claim 1, wherein the organic liquid has a boiling point from 30 to 100 °C.

4. A process as claimed in claim 1, wherein the organic liquid is dichloromethane, chloroform or a mixture thereof.

5. A process as claimed in claim 1, wherein the organic liquid contains in solution as a dispersant from 0.1 to 10 % by weight of a thermoplastic having a glass transition temperature above 100 °C.

6. A process as claimed in claim 1, wherein the impregnated filament bundle is wound onto a core.

7. A process for producing a sheetlike prepreg, which comprises passing a plurality of filament bundles in a parallel arrangement or a fabric through an impregnating bath in the manner of claim 1 and, after drying, cutting the resulting tape into pieces or winding it in continuous form onto a bobbin.

## Revendications

1. Procédé de préparation de pré-imprégnés renforcés par des fibres, caractérisé en ce que l'on fait passer des cordons ou tissus en fibres sans fin à travers un bain, où ils sont imprégnés d'une dispersion d'une polysulfure-cétone ou d'une polyéther-cétone dans un liquide organique, puis on évapore le liquide organique.

2. Procédé suivant la revendication 1, caractérisé en ce que l'on utilise des dispersions de 10 à 50 % en poids de polyéther-cétone ou de polysulfure-cétone.

3. Procédé suivant la revendication 1, caractérisé en ce que l'on emploie un liquide organique, dont le point d'ébullition se situe entre 30 et 100 °C.

4. Procédé suivant la revendication 1, caractérisé en ce que le liquide organique est choisi parmi le dichlorométhane et le chloroforme et les mélanges de ceux-ci.

5. Procédé suivant la revendication 1, caractérisé en ce que l'on utilise un liquide organique, dans lequel sont dissous entre 0,1 et 10 % en poids d'une matière thermoplastique avec une température de transition vitreuse supérieure à 100 °C comme adjuvant de dispersion.

6. Procédé suivant la revendication 1, caractérisé en ce que les cordons de fibres sans fin imprégnés sont enroulés sur un manchon.

7. Procédé de préparation de pré-imprégnés plats, caractérisé en ce que l'on fait passer, conformément à la revendication 1, une multitude de cordons de fibres sans fin parallèles ou un tissu à travers le bain d'imprégnation, la bande formée étant séchée, puis enroulée sur des bobines ou découpée.